# EUROPÄISCHE PATENTANMELDUNG

(11) **EP 2 821 313 A2**
(43) Veröffentlichungstag der Anmeldung: **07.01.2015**
(21) Anmeldenummer: 13178451.4
(22) Anmeldetag: 30.07.2013
(51) Int. Cl.: B61L 27/00

(54) **Einrichtung und Verfahren zum Betreiben von dezentral angeordneten Funktionseinheiten**

(30) Priorität: 02.07.2013 EP 13174634
(71) Anmelder: Siemens Schweiz AG, 8047 Zürich (CH)
(72) Erfinder: Reichlin, Anton, 8400 Winterthur (CH)
(74) Vertreter: Fischer, Michael

(57) **Zusammenfassung**

Erfindungsgemäss sind eine Einrichtung (E) und ein Verfahren zum Betreiben von in einer industriellen Anlage angeordneten dezentralen Funktionseinheiten (DFE, EC) vorgesehen, umfassend:
a) ein übergeordnetes Steuerungssystem (30), das mit den dezentralen Funktionseinheiten (DFE) mittels Datentelegrammen (DT) Informationen austauscht,
b) ein Datentransportnetzwerk (TN) mit einer Anzahl von Netzzugangspunkten (2 bis 16), wobei das übergeordnete Steuerungssystem (30) über mindestens einen Netzzugangspunkt (2, 4) an dem Datentransportnetzwerk (TN) angekoppelt ist;
c) Kommunikationseinheiten (18 bis 28), die an einem Netzzugangspunkt (6 bis 16) angeschlossen sind und den dezentralen Funktionseinheiten den Zugang zu dem Datentransportnetzwerk (TN) bereitstellen,
d) ein Energietransportnetz, an das die dezentralen Funktionseinheiten (DFE) angeschlossen sind und das die dezentralen Funktionseinheiten (DFE) mit elektrischer Energie versorgt;
e) einer Anzahl von intelligenten an dem Energietransportnetz (ETN) angeschlossenen Energiespeichern, die eine Energieaufnahme und/oder - abgabe in Abstimmung mit dem übergeordneten Steuerungssystem und/oder mit mindestens einem der übrigen Energiespeicher ausführen, wobei das Energietransportnetz (ETN) Energieeinspeisepunkte (IEK) aufweist, die entlang einer Busstruktur des Energietransportnetzes verteilt angeordnet sind, wobei die Einspeisepunkte wahlweise durch einen von mindestens zwei unabhängigen Energiebackbones mit entsprechender elektrischer Leistung versorgbar sind.

## Beschreibung

Die vorliegende Erfindung bezieht sich auf eine Einrichtung und ein Verfahren zum Betreiben von in einer industriellen Anlage angeordneten dezentralen Funktionseinheiten gemäss dem Oberbegriff der Patentansprüche 1 bzw. 8.

Derartige dezentrale Funktionseinheiten werden im Besonderen in Schienenverkehrsnetzwerken z.B wie die Eisenbahn eingesetzt, wo diese genutzt werden, um Fahrzeug beeinflussende und/oder Fahrzeug überwachende Einheiten zu steuern und bezüglich der Funktionalität zu überwachen und um Prozessdaten aufzunehmen und zurück an eine zentrale Steuerungs- und/oder Überwachungszentrale, wie zum Beispiel eine Leitstelle oder ein Stellwerk zu melden. Als zugbeeinflussende Einheiten, die also Anweisungen an den Fahrzeugführer geben oder sogar direkt Eingriffe in der Fahrzeugsteuerung vornehmen oder direkt einen sicheren Fahrweg einstellen, können beispielsweise Signale, Weichen, Balisen, Linienleiter, Gleismagnete und dergleichen sowie auch Sensoren zum Erfassen von Prozessgrössen des fahrenden Zuges, wie Leistungsaufnahme, Geschwindigkeit und dergleichen, betrachtet werden. Als Zug- und Gleisabschnitt überwachende Einheiten können ebenfalls Balisen und Linienleiter, aber auch Achszähler und Gleisstromkreise und andere Gleisfreimeldesysteme genannt werden. Grundsätzlich betrifft die vorliegende Erfindung aber alle industriellen Anlagen, in denen funktionale Einheiten über grössere Strecken verteilt sind und dennoch zentral gesteuert werden müssen. Die zentrale Steuerung kann dabei von einer ortsfesten Leitstelle, aber auch durch eine nicht-ortsfeste virtuelle Leitstelle wahrgenommen werden.

Im Eisenbahnverkehr ist es üblicherweise so, dass diese dezentralen Funktionseinheiten von einem Stellwerk oder einem abgesetzten Stellwerkrechner gesteuert werden. Für den Datentransfer zwischen dem Stellwerk und den Funktionseinheiten im Gleisbereich sind heute in der Regel standardisierte Kupferkabel vorgesehen, für deren klassische Stelldistanzlängen wegen der physikalischen Übertragungsparameter, den Kabelbelägen (RLC), bei 10 km in der Praxis die obere Grenze liegt. Bei gewissen Typen von Funktionseinheiten kann diese obere Limite jedoch auch nur bei maximal 6,5 km liegen.

Heutzutage stehen jedoch auch schon Datennetzwerke bei Eisenbahnen im Einsatz, welche dazu verwendet werden z.B. Daten unter benachbarten Stellwerken oder der Stellwerken und Leittechnik auszutauschen. Sie werden jedoch nicht in der Weise eingesetzt, um zugbeeinflussende und/oder zugüberwachende Funktionseinheiten zu steuern und zu überwachen, wodurch eine Überbrückung von fast beliebigen Stelldistanzen zu ermöglichen wäre. Diese Netzwerke sind vielmehr vom Typ eines Datentransportnetzwerkes (DTN), z.B. ein optisches Transportnetzwerkes, ausgestaltet und werden für die Übermittlung von Daten für die operationelle Betriebsebene und dergleichen eingesetzt.

Derartige Datennetzwerke erlauben eine sehr viel höhere Anzahl von Freiheitsgraden hinsichtlich
- der Festlegung der Position der Kopplungspunkte für den Anschluss von Stellwerk- und Leittechnikanlagen oder Teilen davon und somit dessen Aufstellungsorte,
- der angewandten Übertragungs-Verfahren und der Distanzen der Kommunikation unter verschiedenen Anlagenteilen.

Diese Datennetzwerke ermöglichen so mitunter eine wesentliche Verbesserung beim Preis/Leistungsverhältnis und dennoch ein hoch zuverlässiger und entsprechend sicherer Datenaustausch der Eisenbahnsicherungseinrichtungen entlang von Gleisanlagen.

Anschauliche Anwendungsbeispiele für derartige Datennetzwerke sind Nebenstrecken oder Strecken mit ETCS Level 2 oder lange Tunnelstrecken, für die heute immer noch wegen der Limite bei den Stelldistanzlängen mit herkömmlichen Stellwerkkabeln eine Anordnung von Stellwerkrechnern innerhalb von Tunnels erforderlich macht. Die dort herrschenden rauen Einsatzbedingungen erfordern, dass die Stellwerkrechner in Kavernen oder Containern gekapselt und klimatisiert betrieben werden. Der Unterhalt ist in diesen Fällen entsprechend aufwendig. Die ganze Problematik besteht also darin, dass bedingt durch die limitierten Stelldistanzen Stellwerk und Aussenanlageteile nicht beliebig weit auseinander liegen können.

Die neuartigen Datennetzwerke haben jedoch einen Nachteil dahingehend, dass im Grunde jede zentrale und dezentrale Funktionseinheit in geeigneter Weise über einen Zugangspunkt und aus Gründen der Verfügbarkeit in redundanter Weise an ein solches Datennetzwerk angekoppelt werden muss. Damit ist momentan an einem einzelnen Netzwerkknoten für einen Anschluss einer Funktionseinheit ein vergleichsweise hoher Aufwand für die Kopplung mit dem Datennetzwerk erforderlich bei gleichzeitig nur vergleichsweise geringer Datentransferrate in Relation zur Netzwerkkapazität. Während heutige Glasfasernetze beispielsweise Übertragungsraten von GigaBit bis hin zu TeraBit Transferleistung zulassen, werden diesen Übertragungsraten bei diesen sicherungstechnischen Anwendungen jedoch nur sehr marginal genutzt.

Zugleich ist darüber hinaus durchaus ein wirtschaftliches Interesse seitens der Bahninfrastruktur-Betreiber erkennbar, die bestehenden sogenannten langlebigen Stellwerkkabel (an die Schienenwege angepasste Kupferkabel), welche heute für den Betrieb der Funktionseinheiten durch die Stellwerke eingesetzt werden, weiterhin für die Ansteuerung der Aussenanlagen zu nutzen.

Zur Lösung dieser Aufgabe sind aus der europäischen Patentanmeldung EP 2 301 202 A1 eine Einrichtung und ein Verfahren zur Steuerung und/oder Überwachung von entlang eines Verkehrsnetzwerks angeordneten dezentralen Funktionseinheiten bekannt, welche folgenden Kernpunkte umfassen:
a) ein übergeordnetes Steuerungssystem, das mit den dezentralen Funktionseinheiten mittels Datentelegrammen Informationen austauscht,
b) ein Datentransportnetzwerk mit einer Anzahl von Netzzugangspunkten, wobei das übergeordnete Steuerungssystem über mindestens einen Netzzugangspunkt an dem Datentransportnetzwerk angekoppelt ist;
c) Kommunikationseinheiten, die jeweils an einem Netzzugangspunkt angeschlossen sind, wobei:
d) die dezentralen Funktionseinheiten zu Untergruppen mit jeweils eigenem Subnetzwerk zusammengefasst sind; und wobei
e) das Subnetzwerk jeder der Untergruppen an jedem seiner beiden Ende jeweils über eine Kommunikationseinheit und über einem Netzzugangspunkt an dem Datentransportnetzwerk angekoppelt ist.

Auf diese Weise kann für die Ankopplung der dezentralen Funktionseinheiten ein digitales Transportnetzwerk genutzt werden, welches in jeder Weise robust gegen ein einfaches Fehlerereignis ist, dennoch eine sehr geschickte Verwendung von sehr breit in der Bahntechnik eingesetzten Cu-Kabeln, zum Beispiel bisher vorhandenen Stellwerkskabeln, erlaubt und schliesslich auch nur eine vergleichsweise geringe Zahl von Netzzugangspunkten benötigt.

Eine derartige Einrichtung ist dabei in besonders vorteilhafter Weise für ein Schienennetz für den Eisenbahnverkehr einsetzbar. Folglich ist dann in einer weiteren vorteilhaften Ausgestaltung zweckmässig, mittels den dezentralen Funktionseinheiten verkehrsüberwachende und verkehrssteuernde Funktionseinheiten, wie insbesondere Signale, Weichen, Achszähler, Gleisstromkreise, punkt- und linienförmige Zugbeeinflussungselemente, an das Datentransportnetzwerk anzukoppeln.

Der Aufbau von technischen Anlagen, besonders auch in der Bahninfrastruktur, ist aufgrund der über 100 jährigen Geschichte des Industrieanlagenbaus und des Eisenbahnwesens auf Robustheit und Zuverlässigkeit ausgelegt. In der damaligen Konzeption wurden besonders die Aussenelemente der Bahnsicherungsanlagen über relativ kräftige Kabeladern angeschlossen, um die Schaltzustände über die definierten Distanzen sicher detektieren zu können, d.h. die Auslegung erfolgt entsprechend der Spitzenbelastungen mit ausreichender Reserve. Mit dem Schaltvorgang der Aussenelemente wird über die Energiezuführung auch die Information übermittelt. Daraus folgt aber in naheliegender Weise auch, dass die möglichen Distanzen durch den detektierbaren Energiefluss begrenzt sind. Unter heutigen Flexibilitäts-, Kosten- und Ressourcenpolitischen -Aspekten sind diese etablierten Konzepte neben der durch die EP 2 301 202 A1 offenbarte Kommunikationsstruktur dringend auch im Bereich der Energiezuführung zu innovieren. Im Zuge der hiermit eingeleiteten Modernisierung wird die Siemens Aktiengesellschaft, Division Mobility, in den kommenden Jahren grundlegende Innovationen in Bezug auf seine Stellwerksarchitekturen durchführen, wobei der Lösung zur Dezentralisierung der Steuer- und Meldesysteme in den Anlagen voll Rechnung getragen wird. Dies bedeutet, dass im Endausbau alle zu steuernden und überwachenden Elemente (Signale, Weichen, Zugsicherungssysteme, Gleisfreimeldesysteme wie z.B. Achszählpunkte, Bahnübergänge) vor Ort am Gleis ein Steuer- bzw. eine Meldegerät - im folgenden Element Controller EC oder dezentrale Funktionseinheit DFE genannt - erhalten.

Da die strategische Basis für die Zukunft aus den zwei nachfolgend aufgeführten Architekturänderungen bei den elektronischen Stellwerken von Siemens dazuführen wird, dass die bisherige Kopplung von Information und Energie aufgelöst wird, ist es neben dem Einführen eines echtzeitfähigen und hochverfügbaren Wide-Area-Kommunikationssystems zwischen dem Stellwerkrechner (zentrale Steuerungseinheit) und den Stell- und Überwachungsgeräten (Element Controllern EC) entlang dem Gleis erforderlich die Zuführung der Energie vom Stellwerk zu den Element Controllern am Gleis komplett neu zu konzipieren, wofür in der internationalen Patentanmeldung WO 2013/013908 A1 eine Lösung offenbart wird.

Diese Lösung sieht eine Einrichtung und ein Verfahren zum Betreiben von in einer industriellen Anlage angeordneten dezentralen Funktionseinheiten vor, umfassend:
a) ein übergeordnetes Steuerungssystem, das mit den dezentralen Funktionseinheiten mittels Datentelegrammen Informationen austauscht,
b) ein Datentransportnetzwerk mit einer Anzahl von Netzzugangspunkten, wobei das übergeordnete Steuerungssystem über mindestens einen Netzzugangspunkt an dem Datentransportnetzwerk angekoppelt ist;
c) Kommunikationseinheiten, die an einem Netzzugangspunkt angeschlossen sind und den dezentralen Funktionseinheiten den Zugang zu dem Datentransportnetzwerk bereitstellen,
d) ein Energietransportnetz, an das die dezentralen Funktionseinheiten angeschlossen sind und das die dezentralen Funktionseinheiten mit elektrischer Energie versorgt; und
e) einer Anzahl von intelligenten an dem Energietransportnetz angeschlossenen Energiespeichern, die eine Energieaufnahme und/oder -abgabe, ggfs. in Abstimmung mit dem übergeordneten Steuerungssystem, mit mindestens einem der übrigen Energiespeicher ausführen.

Auf diese Weise ist nun auch das Energietransportnetz vollkommen von einem Stellwerk entkoppelt und kann dank der vorgesehenen Energiespeicher nun hinsichtlich der Verkabelung und der Übertragungskapazität auf eine gewisse vorbestimmbare Grundlast ausgelegt werden, wobei Lastspitzen der elektrischen Leistungsaufnahme, beispielsweise beim Ändern der Lage einer Weiche, Schliessen und Öffnen eines Bahnübergangs, durch die intelligenten Energiespeicher geglättet wird. Die Energiespeicher werden als intelligent bezeichnet, weil sie sich für die Leistungsaufnahme und/oder die Leistungsabgabe mit dem übergeordneten Steuerungssystem und/oder mindestens einem der übrigen Energiespeicher dahingehend abstimmen, dass das Aufladen und/oder das Entladen in einer gesteuerten, kontrollierten Weise erfolgen kann.

Ausgehend von der heutigen Stellwerkarchitektur mit dezentralen Stationen, aber Punkt-zu-Punkt-Energiezuführung, wird hiermit ein neuer, innovativer Ansatz beschritten. Die heutigen kabel- und arbeitsintensiven Punkt- zu Punkt-Verbindungen für die Stromversorgung bzw. die Energieversorgung der peripheren Elemente entlang dem Gleis (Element Controller oder auch dezentrale Funktionseinheit genannt) werden ersetzt durch adernsparende und einfach zu montierende Bus- oder Ringleitungen. Der Einsatz von intelligenten, dezentralen Energiespeichern ermöglicht eine einfache Energieversorgung der Element Controller entlang des Gleises auch über grosse Distanzen mit Zuleitungen von kleinem Aderquerschnitt. Kurzeitige Spitzenlasten, wie der Umlauf einer Weiche oder das Öffnen der Schranke eines Bahnübergangs, werden durch die auch als Kurzzeitenergie-speicher ausführbaren Energiespeicher vor Ort abgedeckt. Die Anlagen müssen damit nicht mehr auf den "Worst Case"-Energieverbrauch dimensioniert werden, sondern es genügt eine Auslegung auf den mittleren Energieverbrauch.

Unterstützend kann ein übergeordnetes intelligentes Energiemanagement über die gesamte Anlage für die bedarfsgerechte Zuteilung der Energie bei den einzelnen Verbrauchern wirken. Das intelligente Energiemanagement berücksichtigt einerseits die für eine bestimmte Anlage geforderte Verfügbarkeit in Abhängigkeit der Streckenkategorie sowie auch das aktuelle Verkehrsaufkommen im Bahnbetrieb. Als Energiespeicher können die neuesten Speichertechnologien, z.B. SuperCaps (z.B. Kurzzeitenergiespeicher dezentral) oder Schwungradspeicher mit Verbundwerkstoffen als Systemkomponente zum Einsatz kommen. Damit gelingt es mit diesem Ansatz auch, die heutigen batteriegestützten USV-Systeme (Blei-Accumulatoren) wo immer möglich durch günstigere und ökologisch bessere Speicherkomponenten zu ersetzen. Eine weitere Innovation stellt dabei auch die Eigenintelligenz des einzelnen Energiespeichers im Gesamtsystem dar.

Je nach Anordnung des Speichers in der Netz-Topologie soll nicht nur Energie bedarfsgerecht für einen direkt zugeordneten Verbraucher zur Verfügung gestellt werden, sondern es soll ebenfalls möglich sein, Energie in das Gesamtsystem zurück zu speisen. Dadurch wird die Redundanz der Energiebereitstellung erhöht und es kann so die Verfügbarkeit der Stellwerksanlage gesichert, bzw. gegenüber der heutigen Architektur sogar erhöht werden. Daneben ergeben sich aus der Verwendung intelligenter Energiespeicher sehr weitgehende Möglichkeiten der flexiblen Gestaltung der Stellwerksinfrastruktur bzw. allgemein von Energienetzen. Smart Grids könnten z.B. auf der Basis der hier beschriebenen intelligenten Speicher relativ einfach möglich werden, ohne dass wesentliche Teile eines bestehenden Energieverteilungsnetzes komplett umgestellt werden müssen.

Mit diesem Ansatz wird nicht nur die bisherige Punkt-zu-Punkt-Leitungsführung für die Energieversorgung entlang dem Gleis auf eine neue Basis gestellt, sondern ebenfalls die dadurch bedingte räumlich begrenzte Ausdehnung von Stellwerksanlagen (0 bis 6,5 km) aufgelöst. Dies ermöglicht in Zukunft die Implementierung von elektronischen Stellwerksarchitekturen, die sowohl den Anforderungen nach Funktionalität, Zuverlässigkeit und maximaler Verfügbarkeit Rechnung tragen, als auch Aspekten der Schonung von Ressourcen, Nachhaltigkeit, Energieeffizienz und ökologischer und ökonomischer Gestaltung der Bahninfrastrukturen genügen.

Die in der WO 2013/013908 A1 offenbarte Lösung beschränkt sich aber längst nicht nur auf den beschriebenen Anwendungsfall der Stellwerksarchitektur von Bahnanlagen, sondern geht weit darüber hinaus. Als zukünftige Beispiele werden das Energiemanagement für Gebäude oder für Grossanlagen in der produzierenden oder verarbeitenden Industrie auf der Basis dezentraler Energiespeicher gesehen.

Grundsätzlich zeigt dieser Ansatz die Machbarkeit einer vollkommen vom Stellwerk entkoppelten Energieversorgung für die dezentral angeordneten Element Controller sowie die von ihnen gesteuerten Funktionseinheiten, die weit draussen in der Peripherie beispielsweise bei einer Eisenbahninfrastruktur angeordnet sind. Bisher noch nicht so stark untersucht wurde die Versorgungssicherheit des für diese Versorgung vorgesehenen Energiebusses. Eine naheliegende Massnahme wäre hier die redundante Ausgestaltung des Energiebusses, was aber wieder einen zusätzlichen Verkabelungs- und Installationsaufwand mit sich bringen würde.

Der vorliegenden Erfindung liegt daher die Aufgabe zugrunde, ein System und ein Verfahren zur ausfallsicheren Energieversorgung von dezentralen Element Controllern und den von ihnen gesteuerten Funktionseinheiten anzugeben, die sich durch einen geringen Investitions- und Installationsaufwand und eine hohe Versorgungssicherheit auszeichnen.

Diese Aufgabe wird bezüglich der Einrichtung erfindungsgemäss durch eine Einrichtung zum Betreiben von in einer industriellen Anlage angeordneten dezentralen Funktionseinheiten gelöst, umfassend:
a) ein übergeordnetes Steuerungssystem, das mit den dezentralen Funktionseinheiten mittels Datentelegrammen Informationen austauscht,
b) ein Datentransportnetzwerk mit einer Anzahl von Netzzugangspunkten, wobei das übergeordnete Steuerungssystem über mindestens einen Netzzugangspunkt an dem Datentransportnetzwerk angekoppelt ist;
c) Kommunikationseinheiten, die an einem Netzzugangspunkt angeschlossen sind und den dezentralen Funktionseinheiten den Zugang zu dem Datentransportnetzwerk bereitstellen; und
d) ein Energietransportnetz, an das die dezentralen Funktionseinheiten angeschlossen sind und das die dezentralen Funktionseinheiten mit elektrischer Energie versorgt, wobei das Energietransportnetz Energieeinspeisepunkte aufweist, die entlang einer Busstruktur des Energietransportnetzes verteilt angeordnet sind, wobei die Einspeisepunkte wahlweise durch einen von mindestens zwei unabhängigen Energiebackbones mit entsprechender elektrischer Leistung versorgbar sind.

Bezüglich des Verfahrens wird diese Aufgabe erfindungsgemäss durch ein Verfahren zum Betreiben von in einer industriellen Anlage angeordneten dezentralen Funktionseinheiten gelöst, umfassend:
a) ein übergeordnetes Steuerungssystem, das mit den dezentralen Funktionseinheiten mittels Datentelegrammen Informationen austauscht,
b) ein Datentransportnetzwerk mit einer Anzahl von Netzzugangspunkten, wobei das übergeordnete Steuerungssystem über mindestens einen Netzzugangspunkt an dem Datentransportnetzwerk angekoppelt ist;
c) Kommunikationseinheiten, die an einem Netzzugangspunkt angeschlossen sind und den dezentralen Funktionseinheiten den Zugang zu dem Datentransportnetzwerk bereitstellen; und,
d) ein Energietransportnetz, an das die dezentralen Funktionseinheiten angeschlossen sind und das die dezentralen Funktionseinheiten mit elektrischer Energie versorgt, wobei das Energietransportnetz Energieeinspeisepunkte aufweist, die entlang einer Busstruktur des Energietransportnetzes verteilt angeordnet sind, wobei die Einspeisepunkte wahlweise durch einen von mindestens zwei unabhängigen Energiebackbones mit entsprechender elektrischer Leistung versorgt werden.

Auf diese Weise ist es möglich, das Energietransportnetz jederzeit mit der erforderlichen elektrischen Leistung zu versorgen, wobei die Unabhängigkeit der beiden Energiebackbones eine Garantie dafür ist, dass zumindest bei dem Ausfall eines Energiebackbones immer der jeweils andere Energiebackbone weiterhin intakt ist. Als ein Energiebackbone kommt beispielsweise das öffentliche Versorgungsnetz (in der Schweiz beispielsweise mit der Swissgrid AG als Operator) in Frage. Ein anderer Energiebackbone kann das proprietäre Bahnstromsystem der Eisenbahninfrastrukturbetreiber sein, welche beispielsweise mit den Schweizerischen Bundesbahnen in der Schweiz eigene Kraftwerke zur Erzeugung der für das Bahnstromsystem erforderlichen Energie unterhalten und somit unabhängig vom öffentlichen Versorgungsnetz operieren können. Zu dem proprietären Bahnstromsystem gehört auch der Fahrdraht (Oberleitung), der in der Regel eine hohe geographische Ausdehnung hat. In der Schweiz beispielsweise beträgt die Abdeckung der wichtigsten Haupt- und Nebenstrecken mit einem Fahrdraht nahezu 100%.

Typischerweise sind mittels den dezentralen Funktionseinheiten verkehrsüberwachende und verkehrssteuernde Einheiten, wie insbesondere Signale, Weichen, Achszähler, Gleisfreimeldesysteme, Gleisstromkreise, punkt- und linienförmige Zugbeeinflussungselemente, aber auch Bahnschrankenanlagen, an das Energietransportnetz ankoppelbar.

Um bei einem Ausfall eines Einspeisepunkte (z.B. systemischer Ausfall des zugrundeliegenden Energiebackbones) nicht allzu grösse Streckenlängen bis zum nächstliegenden, noch intakten Einspeisepunktes hinnehmen zu müssen, kann es in einer vorteilhaften Ausgestaltung der Erfindung vorgesehen sein, dass die Einspeisepunkte jeweils alternierend an einen der mindestens zwei unabhängigen Energiebackbones angeschlossen sind.

Besonders geringe Übertragungsverluste und eine hinreichend grosse Leistung können in vorteilhafter Weiterbildung der Erfindung erzielt werden, indem das Energietransportnetz zumindest teilweise als Gleichstrombus angelegt ist, der vorzugsweise eine Spannung von mindestens 400 VDC aufweist. Typischerweise weisen derartige Gleichstrombusse eine Spannung von 750 oder 800 VDC auf.

Eine systemisch besonders ausfallsichere Versorgung eines Energiebackbones lässt sich bereitstellen, wenn einer der mindestens zwei Energiebackbones zur Energieerzeugung auf mindestens ein Wasserkraftwerk, insbesondere ein Flusskraftwerk und/oder ein Speicherseekraftwerk, zurückgreift. Die mit diesen Quellen erzeugbare Energie garantiert eine hohe Verfügbarkeit und damit die gefordert hohe Versorgungssicherheit. Weiter ist es vorteilhaft, wenn hierbei zusätzlich auf mindestens ein Windkraftwerk und/oder mindestens ein Photovoltaikkraftwerk zugegriffen werden kann. In den Zeiten, in denen die witterungsabhängigen Energiequellen Sonne und Wind viel oder nur wenig Energie zur Verfügung stellen können, kann dann das Wasserkraft entsprechend nur wenig bzw. entsprechend mehr elektrische Energie erzeugen. Etwaige Überschussenergie aus Wind und Sonne kann sogar genutzt werden, um Wasser in einen Speichersee oder sonstiges Reservoir hoch zu pumpen und somit Energie für wind- und/oder sonnenärmere Tage bedarfsweise zur Verfügung stellen zu können.

Eine besonders bedarfsgerechte und die last ausbalancierende Lösung ergibt sich, wenn eine Anzahl von intelligenten an dem Energietransportnetz angeschlossenen Energiespeichern vorgesehen sind, die eine Energieaufnahme und/oder -abgabe in Abstimmung mit dem übergeordneten Steuerungssystem und/oder mit mindestens einem der übrigen Energiespeicher ausführen.

Weitere vorteilhafte Ausgestaltungen der vorliegenden Erfindung sind den übrigen Unteransprüchen zu entnehmen.

Vorteilhafte Ausführungsbeispiele der vorliegenden Erfindung werden anhand der Zeichnung näher erläutert. Dabei zeigen:
- Figur 1: in schematischer Ansicht den Aufbau einer Einrichtung E zur Steuerung und/oder Überwachung von entlang eines Eisenbahnnetzwerkes angeordneten dezentralen Funktionseinheiten gemäss EP 2 302 202 A1;
- Figur 2: in schematischer Ansicht eine erste Ausgestaltung für ein Energietransportnetz mit den Varianten a) und b);
- Figur 3: in schematischer Ansicht eine zweite Ausgestaltung für ein Energietransportnetz mit den Varianten a) und b);
- Figur 4: in schematischer Ansicht eine dritte Ausgestaltung für ein Energietransportnetz mit den Varianten a) und b); und
- Figur 5: in schematischer Ansicht den Aufbau eines intelligenten Energiespeichers.

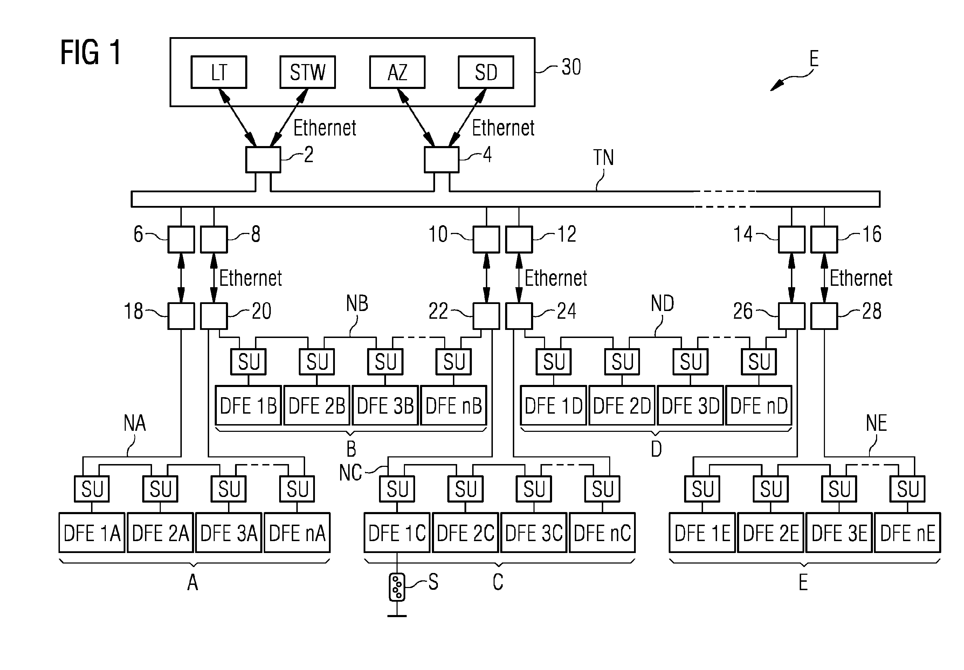

Figur 1 zeigt in schematischer Ansicht den Aufbau einer Einrichtung E zur Steuerung und/oder Überwachung von entlang eines Eisenbahnnetzwerkes (hier nicht weiter dargestellt) angeordneten dezentralen Funktionseinheiten DFE1A bis DFEnA, DFE1B bis DFEnB usw. (im Nachfolgenden auch Element Controller EC genannt). Sollte nicht eine bestimmte Funktionseinheit gemeint sein, werden die dezentralen Funktionseinheiten nachfolgend mit DFE oder EC bezeichnet. Derartige dezentrale Funktionseinheiten DFE werden genutzt, um zugbeeinflussenden und/oder zugüberwachende Einheiten zu steuern und zu überwachen. Als zugbeeinflussende Einheiten können beispielsweise Signale, Weichen, Balisen, Linienleiter, Gleismagnete und dergleichen genannt werden. Als zugüberwachende Einheiten können ebenfalls Balisen und Linienleiter, aber auch Achszähler und Gleisstromkreise genannt werden. Beispielhaft wird durch die dezentrale Funktionseinheit DFE1C ein Signal S gesteuert und überwacht. Die dezentrale Funktionseinheit DFE 1C steuert dabei die Anzeige der Signalbegriffe und führt respektive assistiert bei Überwachungsfunktionen, wie beispielsweise der Überwachung des Lampenstroms im Signalstromkreis.

Jede dezentrale Funktionseinheit DFE respektive die von gesteuerte/überwachte Einheit verfügt im gesamten Netzwerk über eine eindeutige Adresse, beispielsweise eine IP-Adresse oder eine MAC-Adresse.

Die Einrichtung E umfasst weiter ein Datentransportnetzwerk TN mit einer Anzahl von Netzzugangspunkten 2 bis 16. An einem Teil dieser Netzzugangspunkte 6 bis 16 sind Kommunikationseinheiten 18 bis 28 angeschlossen. Das Datentransportnetzwerk TN ist hierbei als hochverfügbares Netzwerk ausgestaltet. Solche hochverfügbaren Strukturen können sich einerseits durch eine redundante Ausführung des Netzes selbst und/oder andererseits durch eine geschickte Re-Organisation des Netzes beim Ausfall eines Verbindungsstückes ergeben.

Ausserdem umfasst die Einrichtung E ein übergeordnetes Steuerungssystem 30, das neben anderen hier nicht weiter aufgeführten Komponenten eine Leitstelle LT, einen Stellwerkrechner STW, einen Achszählerrechner AZ und eine Service/Diagnose-Einheit SD umfasst, die über die Netzzugangspunkte 2 und 4 mittels Ethernet-Verbindungen an das Datentransportnetzwerk TN angeschlossen sind.

Wie in der Figur 1 gezeigt, müssen die dezentralen Funktionseinheiten DFE über eine der Kommunikationsgruppen 18 bis 28 und den entsprechende Netzwerkknoten 6 bis 16 an dem Transportnetzwerk TN angekoppelt sein und können so über dieses Datentelegramme erhalten oder austauschen. Die dezentralen Funktionseinheiten DFE sind dabei zu Untergruppen A, B, C, D und E mit jeweils eigenem Subnetzwerk NA, NB, NC, ND und NE zusammengefasst. Die Untergruppe A wird beispielsweise aus den dezentralen Funktionseinheiten DFE1A, DFE2A, DFE3A bis DFEnA gebildet. Dabei sind die Untergruppen A bis E immer an ihren beiden Enden mit je einer der Kommunikationsgruppen 18 bis 28 und einem Netzzugangspunkten 6 bis 16 verbunden. Jeder dezentralen Funktionseinheit DFE ist zudem ein Vermittlungsrechner SU oder SCU, der alternativ auch direkt in die dezentrale Funktionseinheit DFE integriert sein kann, vorgeschaltet, welcher für die dezentralen Funktionseinheiten DFE den Anschluss an das Subnetzwerk bereitstellt, damit jede dezentrale Funktionseinheit DFE beim Ausfall einer Kommunikationsgruppe noch von einer zweiten redundanten Kommunikationsgruppe 18 bis 28 angesprochen werden kann.

Jedes Subnetzwerk (NA bis NE) ist somit aus einer Anzahl von Punkt-zu-Punkt-Verbindungen von logisch benachbarten dezentralen Funktionseinheiten (DFE) aufgebaut. Dabei ist eine Punkt-zu-Punkt-Verbindung als autonome Übertragungsstrecke innerhalb des Subnetzwerks ausgebildet, zum Beispiel als ISDN-Übertragungsstrecke oder als xDSL-Übertragungsstrecke oder LWL-Übertragungsstrecke. Somit kann ein einzelnes Subnetzwerk sozusagen aus einzelnen Übertragungszellen aufgebaut werden, die ihrerseits jeweils immer nur die Übertragung von Punkt zu Punkt beherrschen müssen. Mit anderen Worten gesprochen können so beispielsweise aus einfachen, eher kurzreichweitigen Übertragungstechniken auch ein viel längeres und komplexeres Subnetzwerk zusammengesetzt werden. Aus diesem Grund ist es zweckmässig, die Punkt-zu-Punkt-Verbindung an jedem Ende mit einem Vermittlungsmodul (SU) zu terminieren, wodurch sich sogar die Chance ergibt, die Punkt-zu-Punkt-Übertragungstechnik von Zelle zu Zelle zu ändern und so die jeweils geeigneteste Übertragungstechnik auswählen zu können. Ein geeignetes Vermittlungsmodul (SU) kann hierzu so ausgestaltet sein, dass es eine Anzahl von Punkt-zu-Punkt-Übertragungstechniken bereitstellt und in Abhängigkeit von der Beschaltung selbstorganisierend die durch die Beschaltung bestimmte Punkt-zu-Punkt-Übertragungstechnik bereitstellt.

Weiter sind die Untergruppen A bis E jeweils auf eine erste Anschlussart oder eine zweite Anschlussart an die zwei Kommunikationsgruppen 18 bis 28 angeschlossen. In der ersten Anschlussart, wie beispielsweise für die Untergruppen A, C und E gezeigt, wird das zugehörige Subnetzwerk NA, NC und NE in zwei geographisch dicht beieinanderliegenden Kommunikationsgruppen 18 und 20 bzw. 22 und 24 bzw. 26 und 28 terminiert, was in der Figur 1 durch die unmittelbare Nachbarschaft der Kommunikationsgruppenpaare 18, 20 und 22, 24 und 26, 28 gezeigt sein soll. In der zweiten Anschlussart, wie für die Untergruppen B und D gezeigt, wird das jeweilige Subnetzwerk NB bzw. ND mit den räumlich weiter auseinanderliegenden Kommunikationsgruppen 20, 22 bzw. 24, 26 terminiert. Auch hier ist dann jede Untergruppe B und D beim Ausfall einer der beiden zugehörigen Kommunikationsgruppen immer noch an einer weiteren Kommunikationsgruppe angeschlossen.

Nimmt man nun einmal an, dass die Netzzugangspunkte 6, 8 und 10, 12 und 14, 16 jeweils an Stationen des Eisenbahnnetzwerkes angeordnet sind, dann stellen die Untergruppen A, C und E eher die im Stationsbereich angeordneten dezentralen Funktionseinheiten DFE dar. Die Untergruppen B und D repräsentieren eher solche dezentrale Funktionseinheiten DFE, die im Bereich zwischen zwei Stationen auf freier Strecke angeordnet sind. Dabei können für die Ankopplung dieser dezentralen Funktionseinheiten DFE möglicherweise die zu weiten Teilen bestehenden Cu-Kabel adernsparend genutzt werden, was am Beispiel der Untergruppe B erläutert wird. Vormals sind beispielsweise die dezentralen Funktionseinheiten DFE1B, DFE2B und DFE3B aus der Station am Netzzugangspunkt 8 angesteuert worden. Entsprechend wurden die übrigen dezentralen Netzzugangspunkte DFEnB aus der Station am Netzzugangspunkt 10 angesteuert. Somit genügte die Herstellung einer Verbindung nur zwischen den dezentralen Funktionseinheiten DFE3B und DFEnB, um die Untergruppe B im Subnetzwerk NB zusammen zu schalten.

Die Systemgrenzen der Einrichtung E können dabei wie folgt beschrieben werden:
- die Anzahl der Netzzugangspunkte 2 bis 16 an dem Transportnetzwerk OTN ist nur durch die Systemperformance (Stellwerkrechner STW, Transportnetzwerk OTN) begrenzt;
- die Anzahl der DFE's an einem Subnetzwerk A bis E beträgt im Minimum eine DFE: Die maximale Anzahl der anschliessbaren DFE's ist durch die Systemperformance begrenzt (erwünscht sein können z.B. mind. 8 DFE's)
- die Anzahl der Kommunikationseinheiten 18 bis 28 an einem Netzzugangspunkt 6 bis 16 ist im wesentlichen durch die max. Anzahl der Ethernet-Schnittstellen der gewählten Netzzugangspunkte 6 bis 16 begrenzt;
- die max. Anzahl der anschliessbaren Subnetzwerke A bis E an einer Kommunikationseinheit 18 bis 28 kann im gewählten Ausführungsbeispiel vier Subnetzwerke betragen;
- zur Sicherung der hohen Verfügbarkeit kann festgestellt werden, dass ein Subnetzwerk A bis E an zwei Kommunikationseinheiten 18 bis 28 angeschlossen sein muss;
- die zu einem Subnetzwerk A bis E gehörenden Kommunikationseinheiten 18 bis 28 an zwei Netzzugangspunkten angeschlossen sein müssen; dabei können die zwei Netzzugangspunkte 2 bis 16 am gleichen Transportnetzwerk OTN oder an zwei Netzzugangspunkten von zwei unterschiedlichen Transportnetzwerken angeschlossen sein (dieser Fall mit einem zweiten Transportnetzwerk OTN ist hier nicht dargestellt worden, aber technisch ohne weiteres realisierbar).

Um den Performance-Anforderungen zu genügen und mit einfachen Übertragungsmitteln, wie z.B. ISDN, xDSL, SHDSL, arbeiten zu können, können die Telegramme innerhalb der Subnetzwerke A bis E unterschieden werden in Realtime und Nichtrealtime-Telegramme:
- Realtime Telegramme: Nutzdatentelegramme vom Stellwerk zu den DFE's als spezielle TCP/IP-Telegramme, spezieller Ethernet-Frametyp;
- Nicht-Realtime Telegramme: normale TCP/IP-Telegramme, keine Nutzdatentelegramme.

Die Telegrammtypen haben feste Timeslots zugeordnet. Die Zuordnung kann während dem Betrieb fix und offline parametrierbar sein, beispielsweise im Verhältnis von mindestens 1 zu 10.

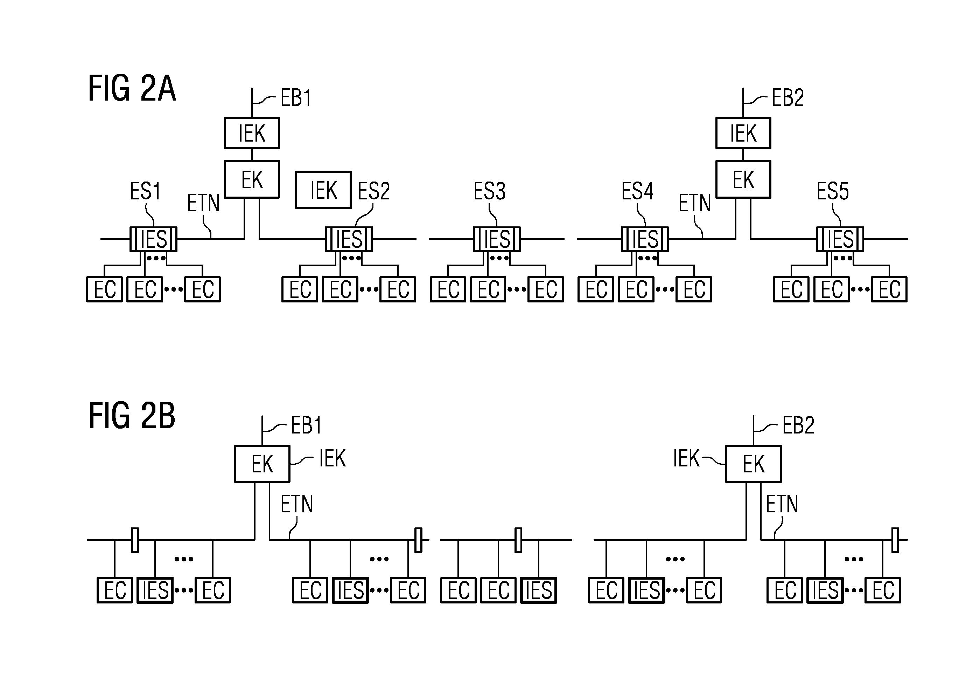

Figur 2 zeigt nun in schematischer Darstellung die gemäss Figur 1 nur noch datentechnisch gültige Situation mit dem erfindungsgemässen Energieversorgungskonzept. Alle Element-Controller DFE, EC sind nun an demselben Energietransportnetz ETN angeschlossen. Die Einspeisung von elektrischer Energie erfolgt nun nicht mehr aus dem zentralen Stellwerk, sondern erfolgt über intelligente Einspeiseknoten IEK, die keinerlei Bezug zur datentechnischen Behandlung der Element-Controller EC haben. An geeigneten Positionen des Energietransportnetzes ETN sind nun intelligente Energiespeicher IES1 bis IES5 an dem Energietransportnetz ETN und dem hier nicht weiter dargestellten Datentransportnetz TN angeschlossen, so dass diese intelligenten Energiespeicher IES1 bis IES5 datentechnisch über das Datentransportnetz TN mit dem zentralen Stellwerk STW kommunizieren können und somit eine Leistungsaufnahme und/oder -abgabe von einem in der Logik des zentralen Stellwerks STW implementierten Energiemanager IEM kontrolliert erfolgen kann (aber nicht muss).

Die im Energietransportnetz ETN benötigte Energie wird dabei an den beiden hier gezeigten Einspeiseknoten IEK durch zwei von einander unabhängige Energiebackbones EB1 und EB2 bereitgestellt. Dabei ist hier vorliegend der Energiebackbone 1 das öffentliche unterbrechungsfreie Stromversorgungsnetzwerk (Ortsnetz). Der Energiebackbone EB2 wird aus dem Fahrdraht des Eisenbahnnetzwerkes versorgt, wobei die Stromversorgung für den Fahrdraht ein proprietärer Aufbau des Bahnbetreibers ist, der hierzu eigene von dem öffentlichen Stromversorgungsnetzwerk unabhängige Kraftwerke aufweist. In der in Figur 2 gezeigten Variante a) werden die Element Controller EC jeweils in Gruppen zusammengefasst von einem intelligenten Energiespeicher IES1 bis IES5 versorgt. In der gezeigten Variante b) bildet das Energietransportnetz ETN einen von dem einen Einspeicheknoten zu dem anderen Einspeiseknoten IEK reichenden Energiebus, an dem die Element Controller EC und die intelligenten Energiespeicher IES jeder für sich ankoppeln.

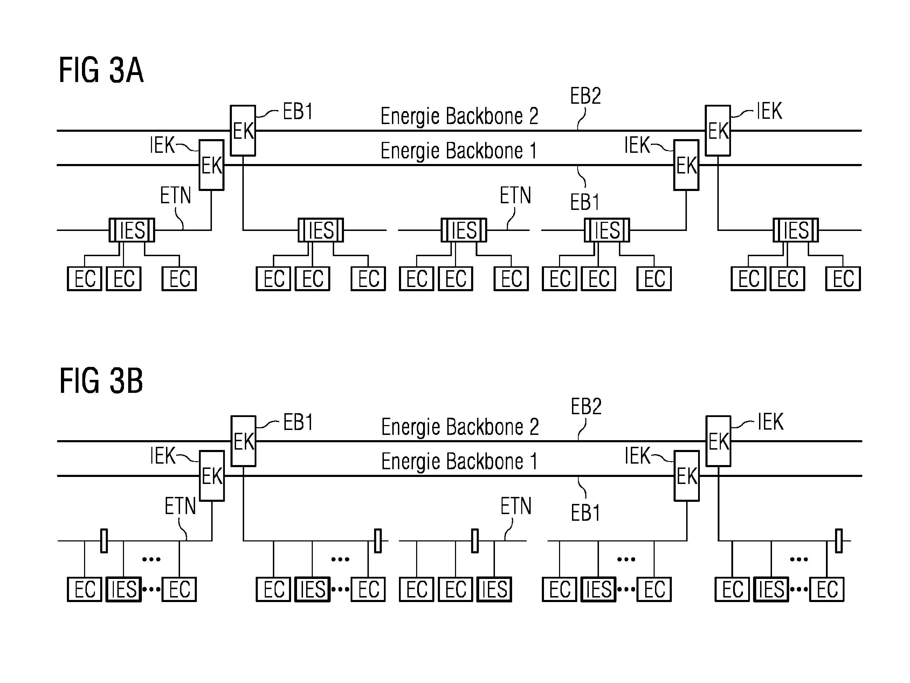

Die Figur 3 zeigt nun eine zweite Variante für ein Energietransportnetzwerk ETN, bei dem zwei redundant ausgestaltete Energiebackbones EB1 und EB2 vorgesehen sind. Dabei ist das Energietransportnetzwerk ETN zwischen zwei Einspeiseknoten IEK busartig gestaltet, wobei ein Einspeiseknoten von dem ersten Energiebackbone EB1 und der andere Einspeiseknoten von dem zweiten Energiebackbone EB2 vorsorgt wird. Teil a) zeigt wieder die in Gruppen an einem intelligenten Energiespeicher IES ankoppelnden Element Controller EC. Teil b) umfasst wieder die individuelle Anschaltung der Element Controller EC und der intelligenten Energiespeicher an das Energietransportnetzwerk ETN. Letztendlich hängt die Beschaltung der Einspeiseknoten IEK von dem hierarchisch vorgesehenen Aufbau der Energiebackbone ab. Fallen beispielsweise bei einem Blackout des Ortsnetzes zwei benachbarte Station aus, so ist es sinnvoll an einem der beiden Stationen den jeweils anderen Energiebackbone anzuschliessen.

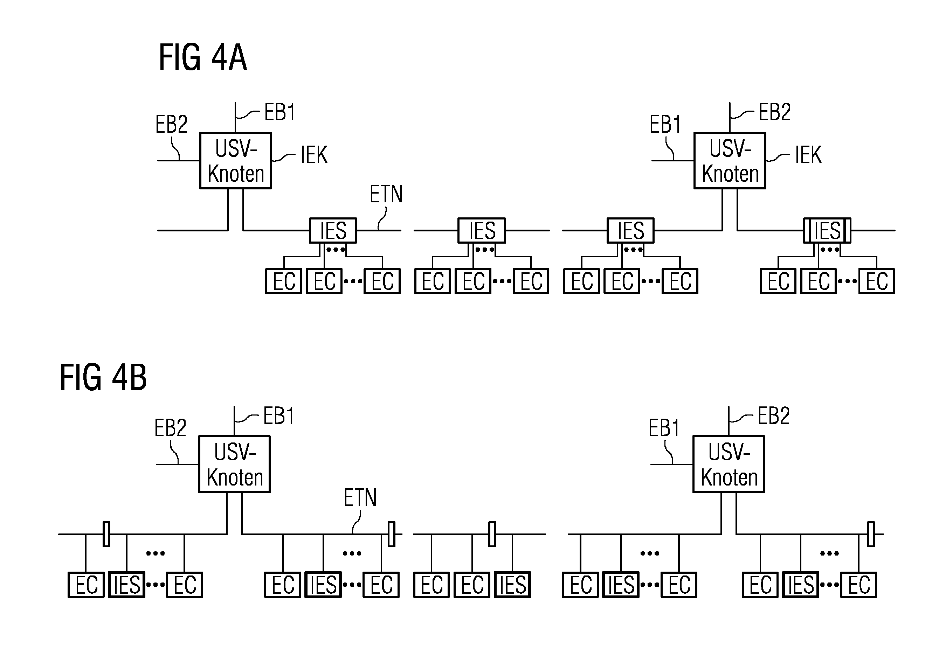

Figur 4 zeigt eine gegenüber die Figur 2 leicht modifizierte Variante, bei der nur die intelligenten Einspeiseknoten IEK jeweils an beiden Energiebackbones EB1 und EB2 hängen.

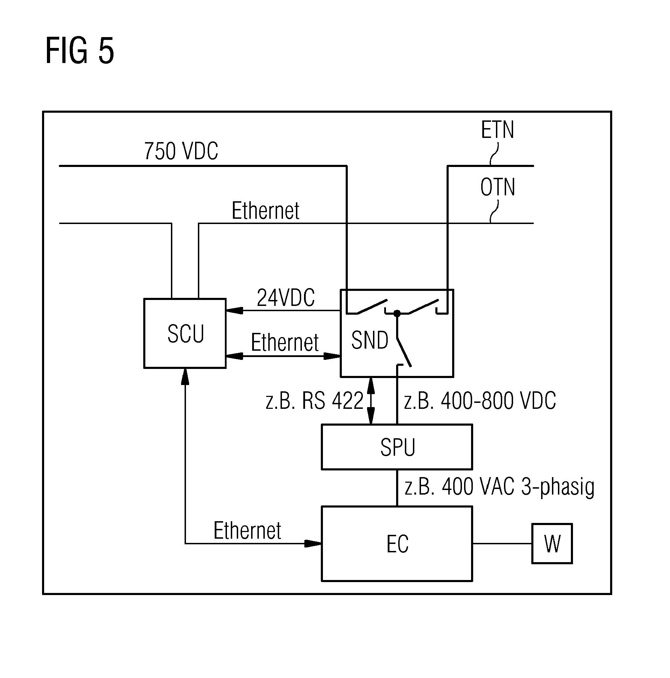

Figur 5 zeigt nun schematisch die daten- und energieversorungstechnische Anschaltung eines Element Controllers EC an das Datentransportnetz OTN bzw. das Energietransportnetz ETN. Ein derartiger Anschaltpunkt umfasst eine Kommunikationseinheit SCU zum Datenaustausch über beiden Ästen des Datentransportnetzes OTN. Energieseitig ist eine Netzknoteneinheit SND vorgesehen, die an beiden Ästen des Energietransportnetzes ETN ankoppelt. Die Netzknoteneinheit SND steuert und überwacht den Energiebus, detektiert Stromüberschreitungen innerhalb des Busses und beim angeschlossenen Verbraucher (SPU mit EC).Sie versorgt auch die Kommunikationseinheit SCU mit Spannung und kann mit dieser auch über eine Ethernet-Verbindung Daten austauschen und ist damit ins Sinet-Netzwerk eingebunden(z.B. Aktivieren des Handbetriebs des SND über Fernzugriff und Betätigen der Energieschalter, Abgabe von Diagnosedaten an ein übergeordnetes Service- und Diagnosesytem, Abfrage der aktuellen Spannungen, Ströme, Energie- und Leistungswerte,Parametrierung des SND, Daten für Aufladung eines Energiespeichers oder die Anmeldung eines zukünftigen Leistungsbedarfs). An der Netzknoteneinheit SND koppelt eine Versorgungseinheit SPU an, die die Spannung des Transportnetzwerkes auf die für den EC erforderliche Eingangsspannung konvertiert. Zudem ist eine Datenverbindung zwischen der Netzknoteneinheit SND und der Versorgungseinheit SPU, z.B. in Form einer serielle RS 422, vorgesehen. Energietechnisch typisch ist hier zum Beispiel eine dreiphasige Verbindung mit 400 VAC. Der Element Controller EC steuert und versorgt in Figur 5 vorliegend die Weiche W. Dabei empfängt der Element Controller EC Datentelegramme vom übergeordneten Stellwerksrechner via einer Ethernet-Verbindung von der Kommunikationseinheit SCU und gibt über diese SCU die Rückmeldungen an den Stellwerksrechner.

Auf die vorstehend gezeigte Weise ist es möglich, das Energietransportnetz ETN jederzeit mit der erforderlichen elektrischen Leistung zu versorgen, wobei die Unabhängigkeit der beiden Energiebackbones EB1, EB2 eine Garantie dafür ist, dass zumindest bei dem Ausfall eines Energiebackbones zumindest der andere Energiebackbone weiterhin intakt ist, was eine Vorsorgungssicherheit von nahezu 100% garantiert. Als ein Energiebackbone kommt beispielsweise das öffentliche Versorgungsnetz (in der Schweiz beispielsweise mit der Swissgrid AG als Operator) in Frage. Ein anderer Energiebackbone kann das proprietäre Bahnstromsystem (Fahrdraht/Oberleitung) der Eisenbahninfrastrukturbetreiber sein, welche beispielsweise mit den Schweizerischen Bundesbahnen in der Schweiz eigene Kraftwerke zur Erzeugung der für das Bahnstromsystem erforderlichen Energie unterhalten und somit unabhängig vom öffentlichen Versorgungsnetz operieren können.

## Patentansprüche

1. Einrichtung (E) zum Betreiben von in einer industriellen Anlage angeordneten dezentralen Funktionseinheiten (DFE, EC), umfassend:
a) ein übergeordnetes Steuerungssystem (30), das mit den dezentralen Funktionseinheiten (DFE, EC) mittels Datentelegrammen (DT) Informationen austauscht,
b) ein Datentransportnetzwerk (TN) mit einer Anzahl von Netzzugangspunkten (2 bis 16), wobei das übergeordnete Steuerungssystem (30) über mindestens einen Netzzugangspunkt (2, 4) an dem Datentransportnetzwerk (TN) angekoppelt ist;
c) Kommunikationseinheiten (18 bis 28), die an einem Netzzugangspunkt (6 bis 16) angeschlossen sind und den dezentralen Funktionseinheiten (DFE, EC) den Zugang zu dem Datentransportnetzwerk (TN) bereitstellen, und
d) ein Energietransportnetz (ETN), an das die dezentralen Funktionseinheiten (DFE, EC) angeschlossen sind und das die dezentralen Funktionseinheiten (DFE, EC) mit elektrischer Energie versorgt, wobei das Energietransportnetz (ETN) Energieeinspeisepunkte (IEK) aufweist, die entlang einer Busstruktur des Energietransportnetzes (ETN) verteilt angeordnet sind, wobei die Energieeinspeisepunkte (IEK) wahlweise durch einen von mindestens zwei unabhängigen Energiebackbones (EB1, EB2) mit entsprechender elektrischer Leistung versorgbar sind.

2. Einrichtung nach Anspruch 1,
**dadurch gekennzeichnet, dass**
die industrielle Anlage ein Schienennetz für den Eisenbahnverkehr ist.

3. Einrichtung nach Anspruch 1 oder 2,
**dadurch gekennzeichnet, dass**
mittels den dezentralen Funktionseinheiten (DFE, EC) verkehrsüberwachende und verkehrssteuernde Einheiten, wie insbesondere Signale (S), Weichen, Achszähler, Gleisstromkreise, punkt- und linienförmige Zugbeeinflussungselemente, an das Energietransportnetz (ETN) ankoppelbar sind.

4. Einrichtung nach einem der Ansprüche 1 bis 3,
**dadurch gekennzeichnet, dass**
die Einspeisepunkte (IEK) entlang der Busstruktur jeweils alternierend an einen der mindestens zwei unabhängigen Energiebackbones (EB1, EB2) angeschlossen sind.

5. Einrichtung nach einem der Ansprüche 1 bis 4,
**dadurch gekennzeichnet, dass**
das Energietransportnetz (ETN) zumindest teilweise als Gleichstrombus angelegt ist, der vorzugsweise eine Spannung von mindestens 400 VDC aufweist.

6. Einrichtung nach einem der Ansprüche 1 bis 5,
**dadurch gekennzeichnet, dass**
ein Energiebackbone (EB1, EB2) zur Energieerzeugung auf mindestens ein Wasserkraftwerk zurückgreift.

7. Einrichtung nach Anspruch 6,
**dadurch gekennzeichnet, dass**
zusätzlich auf mindestens ein Windkraftwerk und/oder mindestens ein Photovoltaikkraftwerk zugreifbar ist.

8. Einrichtung nach einem der vorangehenden Ansprüche, **dadurch gekennzeichnet, dass**
eine Anzahl von intelligenten an dem Energietransportnetz (ETN) angeschlossenen Energiespeichern (IES, IES1 bis IES5) vorgesehen sind, die eine Energieaufnahme und/oder -abgabe in Abstimmung mit dem übergeordneten Steuerungssystem und/oder mit mindestens einem der übrigen Energiespeicher (IES) ausführen.

9. Verfahren zum Betreiben von in einer industriellen Anlage angeordneten dezentralen Funktionseinheiten (DFE, EC), umfassend:
a) ein übergeordnetes Steuerungssystem (30), das mit den dezentralen Funktionseinheiten (DFE, EC) mittels Datentelegrammen (DT) Informationen austauscht,
b) ein Datentransportnetzwerk (TN) mit einer Anzahl von Netzzugangspunkten (2 bis 16), wobei das übergeordnete Steuerungssystem (30) über mindestens einen Netzzugangspunkt (2, 4) an dem Datentransportnetzwerk (TN) angekoppelt ist;
c) Kommunikationseinheiten (18 bis 28, SU), die an einem Netzzugangspunkt (6 bis 16) angeschlossen sind und den dezentralen Funktionseinheiten (DFE, EC) den Zugang zu dem Datentransportnetzwerk (TN) bereitstellen, und
d) ein Energietransportnetz (ETN), an das die dezentralen Funktionseinheiten (DFE, EC) angeschlossen sind und das die dezentralen Funktionseinheiten (DFE, EC) mit elektrischer Energie versorgt, wobei das Energietransportnetz (ETN) Energieeinspeisepunkte (IEK) aufweist, die entlang einer Busstruktur des Energietransportnetzes (ETN) verteilt angeordnet sind, wobei die Einspeisepunkte (IEK) wahlweise durch einen von mindestens zwei unabhängigen Energiebackbones (EB1, EB2) mit entsprechender elektrischer Leistung versorgt werden.

10. Verfahren nach Anspruch 9,
**dadurch gekennzeichnet, dass**
die industrielle Anlage als ein Schienennetz für Eisenbahnverkehr ausgeführt ist.

11. Verfahren nach Anspruch 9 oder 10,
**dadurch gekennzeichnet, dass**
mittels den dezentralen Funktionseinheiten (DFE, EC) verkehrsüberwachende und verkehrssteuernde Funktionseinheiten, wie insbesondere Signale (S), Weichen, Achszähler, Gleisstromkreise, punkt- und linienförmige Zugbeeinflussungselemente, an das Energietransportnetzwerk (ETN) angekoppelt sind.

12. Verfahren nach einem der Ansprüche 9 bis 11,
**dadurch gekennzeichnet, dass**
die Einspeisepunkte (IEK) jeweils alternierend an einen der mindestens zwei unabhängigen Energiebackbones (EB1, EB2) angeschlossen sind.

13. Verfahren nach einem der Ansprüche 9 bis 12,
**dadurch gekennzeichnet, dass**
das Energietransportnetz (ETN) zumindest teilweise als Gleichstrombus angelegt ist, der vorzugsweise eine Spannung von mindestens 400 VDC aufweist.

14. Verfahren nach einem der Ansprüche 9 bis 13,
**dadurch gekennzeichnet, dass**
ein Energiebackbone (EB1, EB2) zur Energieerzeugung auf mindestens ein Wasserkraftwerk zurückgreift.

15. Verfahren nach Anspruch 14,
**dadurch gekennzeichnet, dass**
zusätzlich auf mindestens ein Windkraftwerk und/oder mindestens ein Photovoltaikkraftwerk zugreifbar ist.

16. Verfahren nach einem der Ansprüche 9 bis 15,
**dadurch gekennzeichnet, dass**
eine Anzahl von intelligenten an dem Energietransportnetz (ETN) angeschlossenen Energiespeichern (IES)vorgesehen sind, die eine Energieaufnahme und/oder -abgabe in Abstimmung mit dem übergeordneten Steuerungssystem und/oder mit mindestens einem der übrigen Energiespeicher ausführen.
